# EUROPEAN PATENT SPECIFICATION

(11) **EP 2 297 863 B1**
(45) Date of publication and mention of the grant of the patent: **26.10.2011**
(21) Application number: 08874857.9
(22) Date of filing: 23.12.2008
(51) Int. Cl.: H04B 1/18, H04Q 1/44

(54) **Reduction of the disturbance in an output signal of a multiport connector**
Verringerung der Störung eines Ausgangssignals eines Mehrportverbinders
Réduction de la perturbation dans un signal de sortie d'un connecteur multiports

(30) Priority: 30.06.2008 US 133466; 18.07.2008 US 218934
(43) Date of publication of application: 23.03.2011
(73) Proprietor: Sony Ericsson Mobile Communications AB, 221 88 Lund (SE)
(72) Inventor: KÖRNER, Peter, S-222 20 Lund (SE); ULLÉN, Kaj, S-237 36 Bjärred (SE)
(74) Representative: Banzer, Hans-Jörg
(86) International application number: PCT/EP2008/011067
(87) International publication number: WO 2010/000291

(56) References cited:
- EP-A- 1 605 545
- WO-A-03/107548
- US-A- 5 361 405
- BEUDOT, F.: "Balanced Headphones - Part One" AUDIO REVIEWS, [Online] 1 March 2007 (2007-03-01), pages 1-8, XP002524290 Retrieved from the Internet: URL:http://www.6moons.com/audioreviews/bal ancedheadphones/one.html> [retrieved on 2009-04-17]

## Description

### BACKGROUND OF THE INVENTION

The present invention relates to a method for reducing a disturbance in an output signal caused by a disturbing signal in a multiport connector, a multiport connector circuit, and a mobile device.

### BRIEF SUMMARY OF THE INVENTION

According to an embodiment of the present invention, a method for reducing a disturbance in an output signal caused by a disturbing signal in a multiport connector is provided. The multiport connector comprises an output port adapted to output the output signal and a further port connected to a signal path used by the output signal. The method comprises the following steps. The disturbing signal is detected at the further port and a disturbance reduction signal is generated from the disturbing signal. The output signal is corrected by means of the disturbance reduction signal.

According to an embodiment of the invention, the method comprises furthermore the step of receiving an antenna signal of an antenna connected to the further port.

Furthermore, according to an embodiment, the multiport connector comprises an additional output port adapted to output an additional output signal and the signal path connected to the further port is additionally used by the additional output signal. In this embodiment the method further comprises the step of correcting the additional output signal by means of the disturbance reduction signal.

When using the further port as a common port connected to a signal path used by the output signal, the additional output signal and the antenna signal, especially a crosstalk from the additional output signal may disturb the output signal and vice versa, and the output signal may cause a disturbing crosstalk on the additional output signal via the commonly used further port. As the further port is also used as an input for an antenna signal, the further port used in common cannot be held at a fixed potential thus contributing to a crosstalk between the output signal and the additional output signal. By detecting the disturbing signal, for example the crosstalk signal, at the further port, and generating a disturbance reduction signal from the disturbing signal, the output signal can be corrected by means of the disturbance reduction signal. Furthermore, also the additional output signal can be corrected by means of the disturbance reduction signal. Therefore, the method can provide a reliable reduction of a disturbance in an output signal caused by a disturbing signal in a multiport connector.

According to an embodiment, the method comprises furthermore the step of outputting the corrected output signal to a loudspeaker connected to the output port and the further port. Furthermore, also the corrected additional output signal may be output to an additional loudspeaker connected to the additional output port and the further port. When the output signal and the additional output signal comprise for example a stereo audio output signal, the method may be used for outputting the stereo output signal via a multiport connector, wherein a crosstalk between the channels of the stereo output signal can be reliably reduced.

According to an embodiment, the step of generating the disturbance reduction signal comprises a scaling of the detected disturbing signal. Furthermore, the disturbance reduction signal or the scaled detected disturbing signal may be subtracted from the output signal to correct the output signal. Thus, a very effective and cost effective realization of the method can be provided.

According to a further embodiment of the present invention, a multiport connector circuit is provided. The multiport connector circuit comprises an input port configured to receive an input signal, an output port configured to output an output signal depending on the input signal, a further port connected to a signal path used by the output signal, and a disturbance reduction circuit. The disturbance reduction circuit is connected to the input port, the further port and the output port. The disturbance reduction circuit is configured to detect a disturbing signal at the further port and to generate a disturbance reduction signal from the disturbing signal. Furthermore, the disturbance reduction circuit is adapted to correct the input signal received at the input port by means of the disturbance reduction signal and to output the corrected input signal as the output signal at the output port.

According to an embodiment, the multiport connector circuit comprises an additional input port to receive an additional input signal, and an additional output port configured to output an additional output signal which depends on the additional input signal. The signal path connected to the further port is then additionally used by the additional output signal. According to this embodiment, the disturbance reduction circuit is additionally connected to the additional input port and the additional output port, and the disturbance reduction circuit is configured to correct the additional input signal by means of the disturbance reduction signal and to output the corrected additional input signal as the additional output signal at the additional output port.

Furthermore, according to an embodiment, the further port is adapted to receive an antenna signal of an antenna connected to the further port. When using the further port as a common port connected to a signal path used by the output signal, the additional output signal and the antenna signal, for example in a multiport connector comprising the further port, the output port and the additional output port, a disturbance on the output signal may be caused by a disturbing signal from the additional output signal. The disturbing signal may for example be a crosstalk from the additional output signal on the output signal. In return, a crosstalk on the additional output signal may be caused by the output signal. To reduce the disturbance on the output signal and the additional output signal, according to the present invention, the disturbance reduction circuit detects the disturbing signal at the further port and generates a disturbance reduction signal from the disturbing signal. Then the input signal is corrected by means of the disturbance reduction signal and output as the output signal with reduced or no disturbance like crosstalk at the output port. On the other hand, the disturbance reduction circuit corrects the additional input signal by means of the disturbance reduction signal and outputs the corrected additional input signal as the additional output signal at the additional output port. Thus, a disturbance reduction can be provided for both, the output signal and the additional output signal.

According to a further embodiment of the invention, the output port is adapted to output the output signal to a loudspeaker connected to the output port and the further port. In the same way the additional output port may be adapted to output the additional output signal to an additional loudspeaker connected to the additional output port and the further port. Thus the multiport connector circuit facilitates for example connecting a stereo headset with an integrated antenna to for example a mobile device via a multiport connector comprising only an output port, an additional output port and the commonly used further port.

According to a further embodiment, the disturbance reduction circuit comprises a voltage divider generating the disturbance reduction signal from the detected disturbing signal. Furthermore, the disturbance reduction circuit may comprise a subtracting device adapted to subtract the disturbance reduction signal from the input signal to provide the corrected input signal. In this way a cost-effective multiport connector circuit can be provided and a crosstalk between the channels of a stereo output can be reliably reduced.

According to another embodiment of the present invention a mobile device is provided. The mobile device comprises a multiport connector, an output circuit and a disturbance reduction circuit. The multiport connector comprises an output port configured to output an output signal and a further port connected to a signal path used by the output signal. The output circuit is adapted to output a signal to be output via the output port and the further port. The signal may be an audio signal to be output via the multiport connector to a headset connected to the mobile device. The disturbance reduction circuit is connected to the further port, the output port and the output circuit. The disturbance reduction circuit is configured to detect a disturbing signal at the further port and to generate a disturbance reduction signal from this disturbing signal. The disturbance reduction circuit is furthermore configured to receive the signal from the output circuit and to correct the received signal by means of the disturbance reduction signal and to finally output the corrected signal as the output signal at the output port.

According to an embodiment, the mobile device comprises a radio frequency receiver adapted to receive a radio frequency signal via an antenna connected to the further port. The radio frequency receiver is connected to the further port to receive the radio frequency signal via the antenna connected to the further port. The radio frequency receiver may by adapted to receive a frequency modulated radio frequency signal in the very high frequency transmission band (VHF) or in any other frequency band, or according to any other type of modulation.

According to a further embodiment, the multiport connector comprises an additional output port, and the output circuit is adapted to output an additional signal to be output via the additional output port and the further port. In this case the disturbance reduction circuit is additionally connected to the additional output port. The disturbance reduction, furthermore, is configured to receive the additional signal from the output circuit, to correct the received additional signal by means of the disturbance reduction signal, and to output the corrected additional signal as the additional output signal at the additional output port.

The output circuit may be adapted to output a low frequency audio signal as the signal and the additional signal to be output via the multiport connector. In this case, a stereo headset comprising two loudspeakers or ear speakers and an antenna can be connected to the mobile device via the multiport connector. A first loudspeaker may be connected to the output port and the further port, a second loudspeaker may be connected to the additional output port and the further port, and the antenna may be connected to the further port. As the further port is used for the output signal, the additional output signal and the antenna signal in common, a multiport connector with only three connectors or ports is necessary. This reduces the size of the multiport connector and the cost.

However, as the further port is used in common for passing the antenna signal, the output signal and the additional output signal, a crosstalk between the output signal and the additional output signal may occur. Therefore, the disturbance reduction circuit detects a disturbing signal, for example a crosstalk, at the further port used in common and generates a disturbance reduction signal from the disturbance signal to correct the output signal and the additional output signal. Furthermore, additional disturbances occurring at the further port can be reduced by the disturbance reduction circuit in the same way. Therefore, a reliable disturbance reduction for the output signal and the additional output signal is provided.

According to an embodiment the disturbance reduction circuit comprises a scaling device adapted to generate the disturbance reduction signal from the detected disturbance signal by scaling the detected disturbance signal. Furthermore, the disturbance reduction circuit may comprise a subtracting device adapted to subtract the disturbance reduction signal from the signal to be output. Thus, a cost-effective and reliable disturbance reduction circuit can be provided.

According to an embodiment, the mobile device may be a mobile phone, a personal digital assistant or a mobile computer. These devices in general provide a stereo output and an antenna input for receiving a VHF antenna signal and can thus take advantage of the small multiport connector having three ports only for connecting a stereo headset and an antenna integrated in the stereo headset.

### BRIEF DESCRIPTION OF THE DRAWINGS

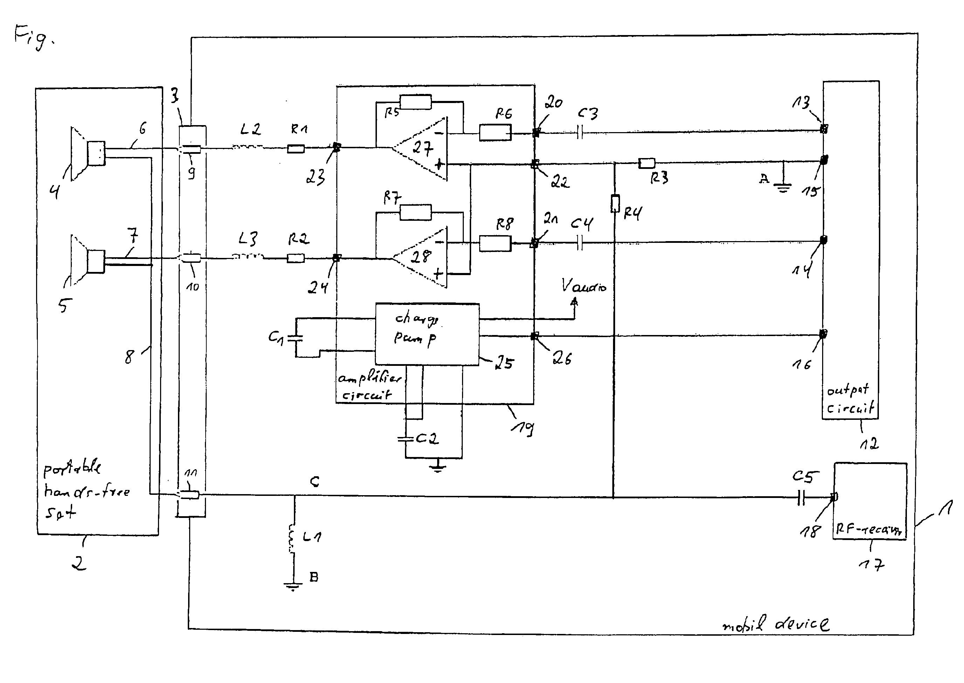

Hereinafter, exemplary embodiments of the invention will be described with reference to the drawing.

The single figure is a schematic view of a part of a mobile device comprising a multiport connector circuit according to an embodiment of the invention.

### DETAILED DESCRIPTION OF THE INVENTION

In the following, exemplary embodiments of the present invention will be described in detail. It is to be understood that the following description is given only for the purpose of illustrating the principles of the invention and is not to be taken in a limiting sense. Rather, the scope of the invention is defined only by the appended claims and is not intended to be limited by exemplary embodiments described hereinafter.

It is also to be understood that in the following detailed description of the exemplary embodiments any direct connection or coupling between functional blocks, devices, components or other physical or functional units shown in the drawing or description herein could also be implemented by an indirect connection or coupling.

It is further to be understood that the features of the various exemplary embodiments described herein may be combined with each other, unless specifically noted otherwise.

The figure shows an embodiment of a mobile device 1, e.g., a mobile phone, connected to a portable hands-free set 2 via a multiport connector 3. The portable hands-free set 2 comprises two ear speakers or loudspeakers 4, 5 for reproducing a stereo output signal to a user of the portable hands-free (PHF) set 2 and a wiring 6-8 connecting the loudspeakers 4, 5 to the multiport connector 3.

The multiport connector 3 comprises for example three ports 9-11 for providing electrical connections from the portable hands-free set 2 to the mobile device 1. As illustrated in the figure, port 9 is connected to a first terminal of loudspeaker 4 via the wire 6, port 10 is connected to a first terminal of loudspeaker 5 via the wire 7, and port 11 is connected to a second terminal of loudspeaker 4 and a second terminal of loudspeaker 5 via the wire 8. The wire 8 additionally serves as an antenna for receiving for example a frequency modulated (FM) broadcast radio signal in for example the very high frequency (VHF) band.

The mobile device comprises an output circuit 12, which may be a so called baseband audio circuit, providing a stereo output signal at outputs 13 and 14. The stereo output signals are usually electrical signals having a single polarity with respect to a signal ground provided at terminal 15 of output circuit 12. Typically, output circuit 12 provides stereo output signals having a positive voltage at outputs 13, 14 with respect to signal ground at terminal 15. Furthermore, the mobile device 1 comprises a radio frequency (RF) receiver 17 having an input 18 for receiving a radio frequency signal from an antenna connected to input 18.

Especially in mobile devices, like mobile phones, personal digital assistants (PDAs) or mobile computers, a stereo output signal is usually output via a portable hands-free set connected via a multiport connector to the mobile device. The multiport connector may comprise three ports, one port for outputting an audio signal of a left channel of the stereo signal, another port for outputting an audio signal of a right channel of the stereo signal and a third port used in common as a return path for the stereo output signals and as a signal path for an antenna signal for a radio frequency receiver of the mobile device. Therefore, the third port cannot be connected directly with ground of the mobile device, but is coupled via a coil to ground and a capacitor to the radio frequency receiver. The coil usually has a resistance of 2-3 Ω, preferably 2.5 Ω or 2.7 Ω. The capacitor may have a capacity in the range of 220 - 1000 pF. Furthermore, in the mobile device for each audio signal output channel there is provided a series connection comprising a capacitor of for example 220 µF and a resistor of for example 10 Ω. The capacitor is necessary to block the direct current component of the output circuit of the mobile device. The coil connecting the third port of the multiport connector to ground is used to tune the antenna and works as a return path to the signal ground for the loudspeaker signals. However, the resistance in the coil constitutes a common path for both loudspeaker signals and will cause a common signal. The level of that common signal defines how high the crosstalk between the channels will be. According to special requirements, e.g., according to the so called "Clear Audio" technology by Sony Corp., the crosstalk may be specified to be less than -40 dB. However, if the coil to ground has a resistance of 2.7 Ω and each loudspeaker has a resistance of 32 Ω and the output circuit has as explained above a channel resistance of 10 Ω, the crosstalk is then 2.7/(32+10)=0.064=-24 dB. This is much higher than the requirement of -40 dB. Furthermore, a disturbance on the stereo output signals may be induced by a so called current clamp applied to the third port used in common of the multiport connector. The current clamp is a test signal applied to the port during a type approval test of the mobile device. The current clamp signal introduces an amplitude modulated (AM) disturbance signal on the third port of the multiport connector during the type approval test. Such a current clamp signal induces a disturbance on the stereo output signals via the third port of the multiport connector, as this port is connected via the coil to ground and not directly connected to the signal ground of the stereo output signal. Finally, the capacities in the stereo output signal paths mentioned above are not suitable to perform a good audio quality and are furthermore very expensive compared to other components in a mobile device.

Therefore, according to the embodiment of the present invention shown in the figure, output 13 of output circuit 12 is connected via a capacitor C3 to an input 20 of an amplifier circuit 19. The other output 14 of the output circuit 12 is connected via a capacitor C4 to an input 21 of the amplifier circuit 19. The capacitors C3 and C4 are used for blocking a direct current component of the audio signals of the output circuit 12. As only very little power is transmitted from the output 13 to the input 20 and from the output 14 to the input 21, capacitors C3 and C4 may have only a value of for example 1 µF each. This provides a much better audio performance than the commonly used capacitors discussed above. Furthermore, these small capacitors C3 and C4 are much more inexpensive and require much less space in the mobile device.

The audio signals input to the amplifier circuit 19 via the inputs 20 and 21 are then amplified by the amplifiers 27 and 28 of the amplifier circuit 19. The gain of the amplifiers 27 and 28 is set by the values of resistors R5 and R6 for amplifier 27 and R7 and R8 for amplifier 28. The amplified signals are then output via outputs 23 and 24 of amplifier circuit 19. Then the amplified audio signals are supplied to the ports 9 and 10 of the multiport connector 3 via the series connection R1, L2 and R2, L3, respectively. As the audio signals input to the amplifier circuit 19 at inputs 20 and 21 as well as the audio output signals of the amplifier circuit at outputs 23 and 24 comprise AC signals having positive and negative voltages with respect to the signal ground at point A of the mobile device connected to the signal ground terminal 15 of the output circuit 12, the amplifier circuit 19 requires a power supply with a negative voltage. Therefore, the amplifier circuit 19 provides a charge pump 25 which provides in combination with capacitors C1 and C2 and a clock signal received at input 26 a negative power supply voltage for the amplifiers 27 and 28 from the positive power supply voltage V_{audio}. The clock signal is provided from a general purpose output 16 of the output circuit 12 to the input 26 of the amplifier circuit 19. The capacitors C1 and C2 may have a capacity of 1 µF.

The signal path via port 11 of multiport connector 3 is used as a return path for the audio output signals output at ports 9 and 10 and returning via the wires 6 and 7, the loudspeakers 4 and 5 and via the wire 8 to port 11. Furthermore, the signal path of port 11 is additionally used for passing a radio frequency signal received by wire 8 acting as an antenna of the portable hands-free set 2. For tuning the antenna a coil L1 is provided connecting the port 11 to ground B of the mobile device. Furthermore, port 11 is connected via a capacitor C5 of for example 220 pF to the radio frequency receiver 17 of the mobile device 1. The coil L1 may have an inductance of 270 nH and a resistance of 2.5 Ω. The resistance of the coil works furthermore as the return path to the signal ground of the stereo signal output by the loudspeakers 4 and 5. However, due to the resistance of coil L1, the potential of point C differs from signal ground at point B or point A. This may induce a crosstalk between the audio signals provided to loudspeakers 4 and 5. To reduce or even eliminate the crosstalk the amplifier circuit 19 has its ground reference on point C instead of point B or A. This is accomplished by a voltage divider comprising resistors R3 and R4 which connect point C and point A in a series connection. The voltage signal between point C and point A corresponds to a disturbing signal which is responsible for the crosstalk. With the voltage divider R3, R4 a signal for reducing the disturbance, that means the crosstalk, is derived and input via an input 22 to the amplifier circuit 19. From the input 22 this disturbance reduction signal is subtracted from each of the audio signals input at the inputs 20 and 21 by the amplifiers 27 and 28, respectively. Thus, the amplifiers 27, 28 together with the resistors R3, R4 create amplifiers with common mode rejection of much more than -20 dB for signals that have their reference points at A and C which are rejected from -24 dB as explained above. Thus, in sum a crosstalk less than -40 dB can be achieved.

Resistors R3 and R4 may have a resistance of for example 22 kΩ each. Advantageously the ratio of R4 to R3 is selected to have the same ratio as R5 to R6 to achieve an appropriate scaling of the disturbance reduction signal at input 22. In general the ratio of R7 to R8 should also be selected to be the same as the ratio of R5 to R6.

Furthermore, a disturbance due to applying a current clamp signal on port 11 of the multiport connector 3, for example, in order to conduct a type approval test for mobile phones, can be reduced in the same way. The current clamp signal generates a disturbing signal in the form of a voltage between point C and point A. This disturbing signal is detected by the voltage divider R3, R4 and appropriately subtracted from the audio output signal by amplifiers 27 and 28, respectively.

The amplifier circuit 19 may be an integrated circuit comprising the charge pump 25, amplifiers 27, 28 and resistors R5-R8. Although the number of components is increased compared to the above-described conventional circuit having the large capacitors of for example 220 µF, the embodiment of the invention provides not only a reduced crosstalk and an increased disturbance reduction due to a current clamp, but is also much more inexpensive, as the large capacitors can be avoided. Finally, a better audio quality can be achieved.

The embodiment described above with reference to the figure may be realized by several components on a printed circuit board or may be realized in an integrated circuit on a semiconductor chip or as a combination thereof. Furthermore, the embodiments described above may not only be used in a mobile device like a mobile phone, a person digital assistant or a mobile computer, but may also be used in any other mobile or non-mobile device comprising a multiport connection. It is also to be understood that all the embodiments described above are considered to be comprised by the present invention as it is defined by the appended claims.

## Claims

1. A method for reducing a disturbance in an output signal caused by a disturbing signal in a multiport connector (3), the multiport connector (3) comprising
- an output port (9) adapted to output the output signal depending on an input signal,
- an additional output port (10) adapted to output an additional output signal depending on an additional input signal,
and
- a further port (11) connected to a signal path used by the output signal and the additional output signal,
the method comprising
- detecting the disturbing signal at the further port (11),
- generating a disturbance reduction signal from the disturbing signal,
- correcting the input signal and the additional input signal by means of the disturbance reduction signal, and
- outputting the corrected input signal as the output signal and the corrected additional input signal as the additional output signal.

2. The method according to claim 1, further comprising the step of outputting the corrected output signal to a loudspeaker (4) connected to the output port (9) and the further port (11).

3. The method according to claim 1 or 2, further comprising the step of receiving an antenna signal of an antenna (8) connected to the further port (11).

4. The method according to any one of claims 1-3, wherein the step of generating the disturbance reduction signal comprises a scaling of the detected disturbing signal.

5. The method according to any one of claims 1-4, wherein the step of correcting the output signal comprises a subtracting of the disturbance reduction signal from the output signal.

6. The method according to any one of claims 1-5, wherein the output signal comprises an audio output signal.

7. A multiport connector circuit, comprising
- an input port (20) configured to receive an input signal,
- an output port (9) configured to output an output signal depending on the input signal,
- additional input port (21) to receive an additional input signal,
- an additional output port (10) configured to output an additional output signal depending on the additional input signal,
- a further port (11) connected to a signal path used by the output signal and by the additional output signal, and
- a disturbance reduction circuit connected to the input port (20), the additional input port (21), the further port (11), the output port (9), and the additional output port (10), the disturbance reduction circuit (19, R3, R4) being configured to detect a disturbing signal at the further port (11), to generate a disturbance reduction signal from the disturbing signal, to correct the input signal received at the input port (20) and the additional input signal received at the additional input port (21) by means of the disturbance reduction signal, and to output the corrected input signal as the output signal at the output port (9), and to output the corrected additional input signal as the additional output signal at the additional output port (10).

8. The multiport connector circuit according to claim 7, wherein the output port (9) is adapted to output the output signal to a loudspeaker (4) connected to the output port (9) and the further port (11).

9. The multiport connector circuit according to claim 7 or 8, wherein the further port (11) is further adapted to receive an antenna signal of an antenna (8) connected to the further port (11).

10. The multiport connector circuit according to any one of claims 7-9, wherein the disturbance reduction circuit (19, R3, R4) comprises a voltage divider (R3, R4) generating the disturbance reduction signal from the detected disturbing signal.

11. The multiport connector circuit according to any one of claims 7-10, wherein the disturbance reduction circuit (19, R3, R4) comprises a subtracting device (27) adapted to subtract the disturbance reduction signal from the input signal to provide the corrected input signal.

12. A mobile device, comprising:
- a multiport connector circuit (3) according to any one of claims 7-11,
- an output circuit (12) adapted to output a signal to be output via the output port (9) and the further port (11) and to output an additional output signal to be output via the additional output port (10) and the further port (11) of the multiport connector circuit (3).

13. The mobile device according to claim 12, wherein the mobile device (1) further comprises a radio frequency receiver (17) adapted to receive a radio frequency signal via an antenna (8) connected to the further port (11).

14. The mobile device according to claim 13, wherein the radio frequency receiver (17) is adapted to receive a frequency modulated radio frequency signal in the very high frequency (VHF) transmission band.

15. The mobile device according to any one of claims 11-14, wherein the mobile device (1) is a device selected from the group comprising a mobile phone, a personal digital assistant, and a mobile computer.

## Patentansprüche

1. Verfahren zum Verringern einer Störung in einem Ausgangssignal, welche durch ein Störsignal in eine Mehrfachanschlussverbinder (3) bewirkt wird, wobei der Mehrfachanschlussverbinder (3) umfasst
- einen Ausgangsanschluss (9), welcher ausgestaltet ist, das Ausgangssignal in Abhängigkeit von einem Eingangssignal auszugeben,
- einen zusätzlichen Ausgangsanschluss (10), welcher ausgestaltet ist, ein zusätzliches Ausgangssignal in Abhängigkeit von einem zusätzlichen Eingangssignal auszugeben, und
- einen weiteren Anschluss (11), welcher mit einem Signalpfad verbunden ist, welcher von dem Ausgangssignal und dem zusätzlichen Ausgangssignal verwendet wird,
wobei das Verfahren umfasst
- Erfassen des Störsignals an dem weiteren Anschluss (11),
- Erzeugen eines Störungsverringerungssignals aus dem Störsignal,
- Korrigieren des Eingangssignals und des zusätzlichen Eingangssignals mittels des Störungsverringerungssignals, und
- Ausgeben des korrigierten Eingangssignals als das Ausgangssignal und das korrigierte zusätzliche Eingangssignal als das zusätzliche Ausgangssignal.

2. Verfahren nach Anspruch 1, ferner umfassend den Schritt eines Ausgebens des korrigierten Ausgangssignals zu einem Lautsprecher (4), welcher mit dem Ausgangsanschluss (9) und dem weiteren Anschluss (11) verbunden ist.

3. Verfahren nach Anspruch 1 oder 2, ferner umfassend den Schritt eines Empfangens eines Antennensignals einer Antenne (8), welche mit dem weiteren Anschluss (11) verbunden ist.

4. Verfahren nach einem der Ansprüche 1-3, wobei der Schritt des Erzeugens des Störungsverringerungssignals ein Skalieren des erfassten Störsignals umfasst.

5. Verfahren nach einem der Ansprüche 1-4, wobei der Schritt des Korrigierens des Ausgangssignals ein Subtrahieren des Störungsverringerungssignals von dem Ausgangssignal umfasst.

6. Verfahren nach einem der Ansprüche 1-5, wobei das Ausgangssignal ein Audioausgangssignal umfasst.

7. Mehrfachanschlussverbinderschaltkreis, umfassend
- einen Eingangsanschluss (20), welcher ausgestaltet ist, ein Eingangssignal zu empfangen,
- einen Ausgangsanschluss (9), welcher ausgestaltet ist, ein Ausgangssignal in Abhängigkeit von dem Eingangssignal auszugeben,
- einen zusätzlichen Eingangsanschluss (21), um ein zusätzliches Eingangssignal zu empfangen,
- einen zusätzlichen Ausgangsanschluss (10), welcher ausgestaltet ist, ein zusätzliches Ausgangssignal in Abhängigkeit von dem zusätzlichen Eingangssignal auszugeben,
- einen weiteren Anschluss (11), welcher mit einem Signalpfad verbunden ist, welcher von dem Ausgangssignal und von dem zusätzlichen Ausgangssignal verwendet wird, und
- einen Störungsverringerungsschaltkreis, welcher mit dem Eingangsanschluss (20), dem zusätzlichen Eingangsanschluss (21), dem weiteren Anschluss (11), dem Ausgangsanschluss (9) und dem zusätzlichen Ausgangsanschluss (10) verbunden ist, wobei der Störungsverringerungsschaltkreis (19, R3, R4) ausgestaltet ist, ein Störsignal an dem weiteren Anschluss (11) zu erfassen, ein Störungsverringerungssignal aus dem Störsignal zu erzeugen, das an dem Eingangsanschluss (20) empfangene Eingangssignal und das an dem zusätzlichen Eingangsanschluss (21) empfangene zusätzliche Eingangssignal mittels des Störungsverringerungssignals zu korrigieren, und das korrigierte Eingangssignal als das Ausgangssignal an dem Ausgangsanschluss (9) auszugeben, und das korrigierte zusätzliche Eingangssignals als das zusätzliche Ausgangssignal an dem zusätzlichen Ausgangsanschluss (10) auszugeben.

8. Mehrfachanschlussverbinderschaltkreis nach Anspruch 7, wobei der Ausgangsanschluss (9) ausgestaltet ist, das Ausgangssignal zu einem Lautsprecher (4) auszugeben, welcher mit dem Ausgangsanschluss (9) und dem weiteren Anschluss (11) verbunden ist.

9. Mehrfachanschlussverbinderschaltkreis nach Anspruch 7 oder 8, wobei der weitere Anschluss (11) ferner ausgestaltet ist, ein Antennensignal einer Antenne (8), welche mit dem weiteren Anschluss (11) verbunden ist, zu empfangen.

10. Mehrfachanschlussverbinderschaltkreis nach einem der Ansprüche 9-7, wobei der Störungsverringerungsschaltkreis (19, R3, R4) einen Spannungsteiler (R3, R4) umfasst, welcher das Störungsverringerungssignal aus dem erfassten Störsignal erzeugt.

11. Mehrfachanschlussverbinderschaltkreis nach einem der Ansprüche 7-10, wobei der Störungsverringerungsschaltkreis (19, R3, R4) eine Subtraktionsvorrichtung (27) umfasst, welche ausgestaltet ist, das Störungsverringerungssignal von dem Eingangssignal zu subtrahieren, um das korrigierte Eingangssignal bereitzustellen.

12. Mobile Vorrichtung, umfassend:
- einen Mehrfachanschlussverbinderschaltkreis (3) nach einem der Ansprüche 7-11,
- einen Ausgangsschaltkreis (12), welcher ausgestaltet ist, ein über den Ausgangsanschluss (9) und den weiteren Anschluss (11) auszugebendes Signal auszugeben und ein über den zusätzlichen Ausgangsanschluss (10) und den weiteren Anschluss (11) des Mehrfachanschlussverbinderschaltkreises (3) auszugebendes zusätzliches Ausgangssignal auszugeben.

13. Mobile Vorrichtung nach Anspruch 12, wobei die mobile Vorrichtung (1) ferner einen Funkfrequenzempfänger (17) umfasst, welcher ausgestaltet ist, ein Funkfrequenzsignal über eine mit dem weiteren Anschluss (11) verbundene Antenne (8) zu empfangen.

14. Mobile Vorrichtung nach Anspruch 13, wobei der Funkfrequenzempfänger (17) ausgestaltet ist, ein frequenzmoduliertes Funkfrequenzsignal in dem Ultrakurzwellenband (UKW) zu empfangen.

15. Mobile Vorrichtung nach einem der Ansprüche 11-14, wobei die mobile Vorrichtung (1) eine Vorrichtung ist, welche aus der Gruppe ausgewählt ist, welche ein mobiles Telefon, einen persönlichen digitalen Assistenten und einen mobilen Computer umfasst.

## Revendications

1. Procédé de réduction d'une perturbation dans un signal de sortie, provoquée par un signal parasite dans un connecteur multiports (3), le connecteur multiports (3) comprenant :
- un port de sortie (9) conçu pour fournir en sortie le signal de sortie dépendant d'un signal d'entrée,
- un port de sortie supplémentaire (10) conçu pour fournir en sortie un signal de sortie supplémentaire dépendant d'un signal d'entrée supplémentaire, et
- un autre port (11) connecté à un trajet de signal utilisé par le signal de sortie et par le signal de sortie supplémentaire,
le procédé comprenant :
- la détection du signal parasite sur l'autre port (11) ,
- la production du signal de réduction de la perturbation à partir du signal parasite,
- la correction du signal d'entrée et du signal d'entrée supplémentaire au moyen du signal de réduction de perturbation, et
- la fourniture en sortie du signal d'entrée corrigé en tant que signal de sortie et du signal d'entrée supplémentaire corrigé en tant que signal de sortie supplémentaire.

2. Procédé selon la revendication 1, comprenant en outre l'étape consistant à fournir en sortie le signal de sortie corrigé à un haut-parleur (4) connecté au port de sortie (9) et à l'autre port (11).

3. Procédé selon la revendication 1 ou 2, comprenant en outre l'étape consistant à recevoir un signal d'antenne d'une antenne (8) connectée à l'autre port (11).

4. Procédé selon l'une quelconque des revendications 1 à 3, dans lequel l'étape de production du signal de réduction de perturbation comprend une modification d'échelle du signal parasite détecté.

5. Procédé selon l'une quelconque des revendications 1 à 4, dans lequel l'étape de correction du signal de sortie comprend une soustraction du signal de réduction de perturbation du signal de sortie.

6. Procédé selon l'une quelconque des revendications 1 à 5, dans lequel le signal de sortie comprend un signal de sortie audio.

7. Circuit connecteur multiports, comprenant :
- un port d'entrée (20) configuré pour recevoir un signal d'entrée,
- un port de sortie (9) configuré pour fournir en sortie un signal de sortie dépendant du signal d'entrée,
- un port d'entrée supplémentaire (21) pour recevoir un signal d'entrée supplémentaire,
- un port de sortie supplémentaire (10) configuré pour fournir en sortie un signal de sortie supplémentaire dépendant du signal d'entrée supplémentaire,
- un autre port (11) connecté à un trajet de signal utilisé par le signal de sortie et par le signal de sortie supplémentaire, et
- un circuit de réduction de perturbation connecté au port d'entrée (20), au port d'entrée supplémentaire (21), à l'autre port (11), au port de sortie (9), et au port de sortie supplémentaire (10), le circuit de réduction de perturbation (19, R3, R4) étant configuré pour détecter un signal parasite sur l'autre port (11), pour générer un signal de réduction de perturbation à partir du signal parasite, pour corriger le signal d'entrée reçu sur le port d'entrée (20) et le signal d'entrée supplémentaire reçu sur le port d'entrée supplémentaire (21) au moyen du signal de réduction de perturbation, et pour fournir en sortie le signal d'entrée corrigé en tant que signal de sortie sur le port de sortie (9), et pour fournir en sortie le signal d'entrée supplémentaire corrigé en tant que signal de sortie supplémentaire sur le port de sortie supplémentaire (10) .

8. Circuit connecteur multiports selon la revendication 7, dans lequel le port de sortie (9) est conçu pour fournir en sortie le signal de sortie à un haut-parleur (4) connecté au port de sortie (9) et à l'autre port (11).

9. Circuit connecteur multiports selon la revendication 7 ou 8, dans lequel l'autre port (11) est en outre conçu pour recevoir un signal d'antenne d'une antenne (8) connectée à l'autre port (11).

10. Circuit connecteur multiports selon l'une quelconque des revendications 7 à 9, dans lequel le circuit de réduction de perturbation (19, R3, R4) comprend un diviseur de tension (R3, R4) produisant le signal de réduction de perturbation à partir du signal parasite détecté.

11. Circuit connecteur multiports selon l'une quelconque des revendications 7 à 11, dans lequel le circuit de réduction de perturbation (19, R3, R4) comprend un dispositif de soustraction (27) conçu pour soustraire le signal de réduction de perturbation du signal d'entrée pour fournir le signal d'entrée corrigé.

12. Dispositif mobile, comprenant :
- un circuit connecteur multiports (3) selon l'une quelconque des revendications 7 à 11,
- un circuit de sortie (12) conçu pour fournir en sortie un signal devant être fourni en sortie par l'intermédiaire du port de sortie (9) et de l'autre port (11) et à fournir en sortie un signal de sortie supplémentaire devant être fourni en sortie par l'intermédiaire du port de sortie supplémentaire (10) et de l'autre port (11) du circuit connecteur multiports (3).

13. Dispositif mobile selon la revendication 12, le dispositif mobile (1) comprenant en outre un récepteur radiofréquence (17) conçu pour recevoir un signal radiofréquence par l'intermédiaire d'une antenne (8) connectée à l'autre port (11).

14. Dispositif mobile selon la revendication 13, dans lequel le récepteur radiofréquence (17) est conçu pour recevoir un signal radiofréquence modulé en fréquence dans la bande de transmission à très haute fréquence (VHF).

15. Dispositif mobile selon l'une quelconque des revendications 11 à 14, le dispositif mobile (1) étant un dispositif sélectionné dans le groupe comprenant un téléphone mobile, un assistant numérique personnel et un ordinateur mobile.
